# EUROPÄISCHE PATENTANMELDUNG

(11) **EP 2 436 617 A1**
(43) Veröffentlichungstag der Anmeldung: **04.04.2012**
(21) Anmeldenummer: 11183013.9
(22) Anmeldetag: 27.09.2011
(51) Int. Cl.: B65G 1/04

(54) **Ablage-, Entnahme- und Transportsystem für Textilerzeugnisse, insbesondere Bekleidungsstücke**

(30) Priorität: 04.10.2010 DE 202010008717 U
(71) Anmelder: Fraas, Alfred, 82515 Wolfratshausen (DE)
(72) Erfinder: Fraas, Alfred, 82515 Wolfratshausen (DE)
(74) Vertreter: König, Beate

(57) **Zusammenfassung**

Ein Ablage-, Entnahme- und Transportsystem für Textilerzeugnisse, insbesondere Bekleidungsstücke, gemäß der Erfindung umfasst ein Magazin (2) mit Aufnahmen (14) zum Aufbewahren der Bekleidungsstücke (24, 26) und eine mit einem Greifer versehene Beschickungs- und Entnahmevorrichtung (50) zum Einbringen und Entnehmen der Bekleidungsstücke aus den Aufnahmen des Magazins, wobei der Greifer horizontal und vertikal verfahrbar ist und eine Steuerung für den Antrieb des Greifers vorgesehen ist. Das Magazin (50) und die Aufnahmen (14) sind jedenfalls beim Vorgang des Einbringens und Entnehmens der Bekleidungsstücke in das und aus dem Magazin ortsfest. Die Beschickungs- und Entnahmevorrichtung (50) ist zwischen dem Magazin und mindestens einer Station (90, 120) zur Entgegennahme und/oder Übergabe der Bekleidungsstücke (24, 26) horizontal verfahrbar, wobei eine Steuerung für die Beschickungs- und Entnahmevorrichtung (50) und des Greifers vorgesehen ist und ein Speicher zur Speicherung der Ablage- bzw. Lagerpositionen der Bekleidungsstücke vorgesehen ist.

## Beschreibung

Die Erfindung betrifft ein Ablage-, Entnahme- und Transportsystem für Textilerzeugnisse, insbesondere Bekleidungsstücke, umfassend ein Magazin mit Aufnahmen zum Aufbewahren der Bekleidungsstücke und eine mit einem Greifer versehene Beschickungs- und Entnahmevorrichtung zum Einbringen und Entnehmen der Bekleidungsstücke aus den Aufnahmen des Magazins, wobei der Greifer horizontal und vertikal verfahrbar und vorzugsweise drehbar ist und eine Steuerung für den Antrieb des Greifers vorgesehen ist.

Ein derartiges Ablage-, Entnahme- und Transportsystem für Wäschereien und Reinigungen ist aus der DE 203 06 877 U1 bekannt. Die Bekleidungsstücke sind in einem Horizontalförderer im Magazin auf Bügeln an Haken aufgehängt, die an einer Gleitschiene angeordnet sind und bis zu drei Kleiderbügel aufnehmen können. Auf einer Seite des Horizontalförderers ist ein Gestell angeordnet, an dem ein Greifer für das Aufhängen und Entnehmen der Bekleidungsstücke angebracht ist. Mittels des Horizontalförderers werden die zur Entnahme vorgesehenen Bekleidungsstücke oder freie Haken zum Aufhängen von Bekleidungsstücken zum Gestell hin transportiert. Der Greifer ist zwischen einer ersten und einer zweiten Position quer zur Verfahrrichtung des Horizontalförderers horizontal sowie in der Höhe verfahrbar und kann so mit den aufgehängten Bügeln in Eingriff treten bzw. Bügel an Haken aufhängen. Zur Vereinzelung der Bekleidungsstücke sind zwei horizontal und vertikal verfahrbare Schwerter vorgesehen.

Aus der EP 1 528 504 A1 ist ein Verfahren zur Identifikation von Bekleidungsstücken in Wäschereien und Reinigungsbetrieben bekannt geworden, bei dem RFID-Chips an oder in den den Bekleidungsstücken vorübergehend oder dauerhaft angebracht werden und im Betrieb von RFID-Leseeinrichtungen identifiziert werden. Die Informationen dienen der Vereinfachung der Auftragserfassung und -bearbeitung, Erfassung von auf dem Chip gespeicherten Materialeigenschaften der Bekleidungsstücke sowie der Vereinfachung der Abgabe, Zahlung, Lieferung sowie Rückverfolgung bei der Abwicklung von Reklamationen.

In der DE 10 2008 029 387 A1 ist ein Verfahren für den halbautomatischen Betrieb eines Reinigungsbetriebs beschrieben, bei dem der Kunde ein elektronisches Identifizierungsetikett, insbesondere einen RFID-Chip, sowie einen Abholausweis aus einem Automaten entnimmt, das Identifizierungsetikett am Bekleidungsstück anbringt und das Bekleidungsstück anschließend abgibt. Bei der Rückgabe des gereinigten Bekleidungsstücks werden der Abholausweis und der RFID-Chip am Bekleidungsstück identifiert und eine Zuordnung vorgenommen. Es ist dann eine automatisierte Ausgabe des Bekleidungsstücks möglich.

Bei einer Steuereinrichtung an einer Verpackungsmaschine für Bekleidungsstücke gemäß DE 37 37 484 C2 ist es vorgesehen, dass ein Abtaster an den vereinzelten Bekleidungsstücken für eine Einzel- oder Mehrfachverpackung eine Magnet- oder Farbabtastung vornimmt.

Der Erfindung liegt die Aufgabe zugrunde, ein System zur Ablage, Entnahme und zum Transport von Textilerzeugnissen, insbesondere Bekleidungsstücken zu schaffen, das eine sichere und kostengünstige Handhabung sowie Transport der Bekleidungsstücke ermöglicht.

Diese Aufgabe ist durch die Erfindung bei einem System mit den Merkmalen des Anspruchs 1 gelöst. Vorteilhafte Weiterbildungen des erfindungsgemäßen Systems sind Gegenstand der Unteransprüche.

Ein Ablage-, Entnahme- und Transportsystem für Textilerzeugnisse, insbesondere Bekleidungsstücke, gemäß der Erfindung umfasst somit ein Magazin mit Aufnahmen zum Aufbewahren der Bekleidungsstücke und eine mit einem Greifer versehene Beschickungs- und Entnahmevorrichtung zum Einbringen und Entnehmen der Bekleidungsstücke aus den Aufnahmen des Magazins, wobei der Greifer horizontal und vertikal verfahrbar ist und eine Steuerung für den Antrieb des Greifers vorgesehen ist. Das Magazin und die Aufnahmen sind jedenfalls beim Vorgang des Einbringens und Entnehmens der Bekleidungsstücke in das und aus dem Magazin ortsfest. Die Beschickungs- und Entnahmevorrichtung ist zwischen dem Magazin und mindestens einer Station zur Entgegennahme und/oder Übergabe der Bekleidungsstücke horizontal verfahrbar, wobei eine Steuerung für die Beschickungs- und Entnahmevorrichtung und des Greifers vorgesehen ist und ein Speicher zur Speicherung der Ablage- bzw. Lagerpositionen der Bekleidungsstücke vorgesehen ist.

Das erfindungsgemäße System ermöglicht es, das Auffinden der Textilerzeugnisse und deren Entnahme, genauer alle Aktionen bis zur Entnahme der Textilerzeugnisse durchzuführen, ohne dass die Textilerzeugnisse aus ihrer Ablage- bzw. Lagerposition bewegt werden müssen. Es ist somit nicht wie beispielsweise bei dem System gemäß DE 203 06 877 U1 notwendig, sämtliche Textilerzeugnisse mit dem Horizontalförderer für die Entnahme oder Ablage eines Textilerzeugnisses zu bewegen. Dadurch, dass stattdessen nur die Beschickungs- und Entnahmevorrichtung bewegt werden muss, ist die für den Antrieb erforderliche Energie weitaus geringer und der Vorgang kann schneller ablaufen. Berührungen und Reibungen der Bekleidungsstücke aneinander und an den Umhüllungen finden nicht statt, so dass es zu keinen statischen Aufladungen und gegebenenfalls Verschmutzungen der Bekleidungsstücke kommt, wie dies bei Horizontalförderern der Fall ist. Des Weiteren entfallen auch durch feste Anordnung im Magazin Minderungen der Bügelqualität, während bei Horizontalförderern die Bügel fortlaufend bewegt werden und die Bekleidungsstücke sich ständig reiben.

Bei den Aufnahmen für die Textilerzeugnisse, insbesondere Bekleidungsstücke, die vorzugsweise auf Bügeln aufgehängt sind, können zwar Horizontalförderer für die Aufbewahrung oder Zwischenlagerung der Textilerzeugnisse verwendet werden. Jedoch können stattdessen auch vorteilhaft Regale, Gestelle, Hakenanordnungen, Stangen mit Aufnahmeöffnungen, -vertiefungen, etc. für die Aufbewahrung der Textilerzeugnisse vorgesehen werden und sie werden hier allgemein als Magazin bezeichnet. Es sind auch platten- oder fachartige Aufnahmen für die Textilerzeugnisse, etwa Bettwäsche, gegebenenfalls mit Aufnahmeschalen, denkbar, wenn diese liegend gelagert und transportiert werden. Bedarfsweise können die Regale und Gestelle transportabel ausgeführt sein. Für das Einbringen und Entnehmen der Textilerzeugnisse und deren Handhabung im jeweiligen Textilbetrieb ist es nur erforderlich, dass definierte Textilerzeugnisse sich im Magazin an bekannten Positionen befinden.

Dies kann erreicht werden, indem die Beschickungs- und Entnahmevorrichtung die dem Magazin zuzuführenden Textilerzeugnisse von einer vorhergehenden Station gezielt aufnimmt und rechnergesteuert eine aus dem Speicher abgerufene freie Aufnahme im Magazin aufsucht und dort das jeweilige Textilerzeugnis ablegt. Die Positionsdaten sind dann dem Textilerzeugnis zugeordnet. Alternativ kann auch vorgesehen sein, dass die Beschickungs- und Entnahmeeinrichtung mit einem Sensor ausgestattet ist, entlang des Magazins verfahren wird, beim Verfahren die nächste freie Aufnahme erfasst und das Textilerzeugnis dort ablegt. Die Koordinaten (Positionsdaten) der Aufnahme werden dann zusammen mit den Daten des Textilerzeugnisses im Speicher abgelegt.

Bei einer weiteren Ausführung des erfindungsgemäßen Systems können die Textilerzeugnisse mit Identifierungsmitteln, z.B. Identifizierungsetiketten, RFID-Chips, versehen sein. Die Beschickungs- und Entnahmevorrichtung, die immer oder mitunter die Textilerzeugnisse der Reihe nach von einer vorhergehenden Station abholt, ist mit einem Sensor versehen, der die Textilerzeugnisse zu deren Identifizierung abtastet und entsprechende Informationen an die Steuerung übermittelt. Die Ablage im Magazin erfolgt entweder am nächsten freien Platz oder von der Steuerung vorgegeben. Im Speicher sind die Identifizierungs- und Positionsdaten des Textilerzeugnisses gespeichert.

Es kann auch bei einem Produktionsbetrieb vorgesehen sein, die Textilerzeugnisse nach Farbe zu selektieren. Bei Reinigungsbetrieben ist auch die Erfassung auch der Größe und des Herstellers von Interesse. So kann beispielsweise die Beschickungs- und Entnahmevorrichtung mit einem Sensor zur Identifizierung der Textilerzeugnisse nach ihrer Farbe, Größe und des Herstellers ausgestattet sein. Gegebenenfalls können die Bekleidungsstücke fotografisch erfasst werden. Dann werden die betreffenden Eigenschafts- und Farb-Identifierungsdaten zusammen mit der Position, sofern diese nicht von der Steuerung vorgegeben wurde, an die Steuerung übermittelt.

Das erfindungsgemäße System wird vorzugsweise bei Reinigungsbetrieben eingesetzt. Die Textilerzeugnisse, meistens Bekleidungsstücke, können beispielsweise von Bügelstationen ins Magazin verbracht werden. Sie können auch vom Magazin zu einer Verpackungsstation transportiert, dort verpackt und wieder zurück ins Magazin gebracht und dort einsortiert werden. Die Aufnahme muss nicht dieselbe wie vorher sein. Wesentlich ist nur, dass im Speicher die aktuellen Positionskoordinaten für jedes Bekleidungsstück bekannt sind.

Die Aufnahmen sind zweckmäßig für das Aufhängen oder Legen mehrerer Bekleidungsstücke ausgebildet. Dies ermöglicht es zum Beispiel, zu einem Auftrag gehörende Bekleidungsstücke zusammenzuhängen und gemeinsam zu verpacken. Wenn die Aufnahme nicht alle zu einem Auftrag gehörenden Bekleidungsstücke aufnehmen kann, wird eine weitere Aufnahme von der Beschickungs- und Entnahmevorrichtung angefahren.

In dem Fall einer Regal- oder Gestellanordnung als Magazin für hängend aufbewahrte Textilerzeugnisse können vorzugsweise horizontale Schlitzreihen für die Aufnahme von Bügeln vorgesehen werden. Die Schlitze sind zweckmäßig etwa rechteckförmig mit vertikaler Längsseite, wobei ihre untere Schmalseite nach unten spitz zulaufend ausgebildet ist. Dies ermöglicht ein sicheres Einhängen der Bügel. Selbstverständlich sind andere Schlitzformen und auch ganz andere Öffnungsgeometrien möglich, wie oben erwähnt. Eine horizontale Ausrichtung der Aufnahmen ist nicht zwingend, aber für das Arbeiten einer Entnahme- und Beschickungsvorrichtung in der Regel aufgrund der geringeren Positionsveränderungen zweckmäßig. Um Lagerraum einzusparen, können mehrere Magazinetagen vorgesehen sein. Im Fall eines Regals mit Schlitzreihen, die als Blech- oder Kunststoffstreifen übereinander angeordnet sind, kann eine klappbare Ausführung der unteren Schlitzreihe vorgesehen werden, um gegebenenfalls Textilerzeugnisse mit größerer Länge an der oberen Schlitzreihe aufhängen zu können. Entsprechendes kann für andere Ausführungen der Aufnahmen für die Textilerzeugnisse vorgesehen werden.

Die mobile Beschickungs- und Entnahmevorrichtung ist vorzugsweise entlang einer Führung verfahrbar, wodurch der Steuerungsaufwand verringert ist. Die Führung kann der Magazingestalt angepasst sein, beispielsweise auch gekrümmte Bahn oder Verzweigungen haben, so dass im Fall mehrerer Regalreihen diese auch aufgesucht werden können. Als Führung kann eine Schiene oder auch ein Schienenpaar verwendet werden. Es kann auch eine hängende Führung vorgesehen werden.

Bei einer vorteilhaften Ausführung der Beschickungs- und Entnahmevorrichtung umfasst diese ein um eine vertikale Achse drehbares Drehgestell mit einem höhenverstellbaren Greiferträger. Bei diesem kann es sich um eine Anordnung mit einer oder mehreren Teleskopstangen handeln oder eine Halterung des Greifers kann entlang einer oder mehrerer am Drehgestell angebrachter Stangen, gegebenenfalls auch Teleskopstangen, vertikal verfahrbar sein. Diese Konfiguration ermöglicht einen raschen Zugriff auf Aufnahmen im Magazin, wenn sich die Aufnahmen links und rechts von der Bahn bzw. Führung (Schienen) der Beschickungs- und Entnahmevorrichtung befinden.

In der einfachsten Form könnte die Beschickungs- und Entnahmevorrichtung aus einem horizontal verfahrbaren oder drehbaren Teleskop bestehen. Denkbar ist auch der Einsatz eines Roboters mit drehbaren Gelenken. Es könnte auch ein Roboter vorgesehen werden, der auf wesentlichen Teile reduziert ist, wobei beispielsweise der Greifer nur horizontal oder drehbar verfahren wird und nur eine Ebene von Magazinaufnahmen bedient.

Mobile Magazine können für den Austasuch mit anderen Lagerstandorten eingesetzt werden. Befüllte Magazine werden zu anderen Stationen transportiert, zweckmäßig dorthin gerollt. Dort können die Bekleidungsstücke aus gefüllten Magazinen mit einer ähnlichen Anlage an Kunden ausgegeben werden. Vorzugsweise werden als Ausgabestation dienende Container mit einem Roboter und einer Ausgabeeinheit ausgestattet.

Für den Zugriff auf die Aufnahmen, in denen Bügel eingehängt oder aus denen Bügel entnommen werden sollen, ist an einer am Drehgestell befindlichen, gegebenenfalls teleskopischen Stange oder Stangenanordnung, ein vorzugsweise teleskopisch ausgeführter Arm angebracht, entlang dem bzw. mit dem der Greifer bzw. dessen Halterung vor und zurück verfahrbar ist.

Das Ausfahren des Arms und das Verfahren des Greifers nach außen erfolgt, wenn die Beschickungs- und Entnahmevorrichtung die Position der anzufahrenden Aufnahme im Magazin oder einer diesem zugeordneten Arbeitsstation erreicht hat. Dann wird das Drehgestell für einen Zugriff auf die vorgesehene Seite seines Verfahrwegs gedreht. Der Greifer befindet sich schon in der richtigen Höhe oder wird nach oben oder nach unten verfahren, bis sich der Greifer in der Höhe der anzufahrenden Aufnahme befindet. Dann wird der Greifer und bedarfsweise der Arm teleskopisch zur Aufnahme hin ausgefahren und der Greifvorgang wird durchgeführt. Anschließend wird der Greifer und gegebenenfalls Arm wieder eingefahren.

Bei einem Ausführungsbeispiel der Erfindung ist die Halterung des Greifers am Arm drehbar angebracht. Dies ermöglicht es, nach dem Einfahren des Greifers aufgenommene Bügel (einer oder mehrere Bügel) mit Bekleidungsstücken aus der Orientierung parallel zur Fahrtrichtung senkrecht zu dieser auszurichten. Auf diese Weise können die Bügel auch schräg oder quer zum Arm eingehängt oder aufgenommen werden.

Zur Vereinzelung der in einer Aufnahme hängenden Bekleidungsstücke oder sonstigen Textilerzeugnisse sind vorzugsweise Trennrohre oder -stäbe vorgesehen.

Für den robotergesteuerten Zugriff auf die Textilerzeugnisse werden zweckmäßig Vereinzelungsvorrichtungen eingesetzt. Bei einem Ausführungsbeispiel der Erfindung ist eine Transport- und Vereinzelungsvorrichtung für Bügel vorgesehen, umfassend zwei parallele, horizontal ausgerichtete, langgestreckte Elemente wie Stangen oder Platten, deren Schmallängsseiten nach oben weisen und an deren Ende sich ein Vereinzelungsabschnitt befindet. Das eine langgestreckte Element wird mittels eines Kulissenantriebs intermittierend in eine Schubbewegung in Richtung des Vereinzelungsabschnitts vorbewegt. Vorzugsweise sind Distanzhakenelemente an dem anderen langgestreckten Element schwenkbar gelagert.

Das erfindungsgemäße System eignet sich zur Automatisierung auch der Auftrags- und Warenannahme und zur Warenausgabe. Sofern die Bekleidungsstücke noch nicht mit einem Identifizierungsmittel ausgestattet sind, können hierfür Ausgabeautomaten aufgestellt werden. Beispielsweise im Fall von RFID-Chips können diese in Taschen der Bekleidungsstücke untergebracht oder in Beuteln oder dergleichen an den Bekleidungsstücken angebracht werden.

Es kann eine Übergabestation vorgesehen sein, die die zu einem Auftrag gehörenden Bekleidungsstücke aufnimmt und abtastet. Sofern Sonderbehandlungen notwendig sind, kann eine hierfür vorgesehene Eingabeeinheit es ermöglichen, Hinweise auf spezielle Flecken und deren Ort am Bekleidungsstück zu geben. Hierzu kann ein Touch-Screen mit einer schematischen Abbildung des Bekleidungsstücks und Feldern zur Art der Verschmutzung, Angabe einer speziellen Behandlung dienen. Für die Bezahlung kann beispielsweise eine Code-Eingabe (Kundennummer, Kontonummer, etc.) vorgesehen werden. Es kann auch ein Kartenlesegerät für eine Kundenkarte, EC-Karte, etc. eingebaut sein. Für die Abholung kann entweder das Eingeben einer vergebenen Auftragsnummer ausreichend sein oder das Einlesen einer Kundenkarte erforderlich sein. Es kann auch einfach ein Auftragspapierbeleg eingelesen werden.

Wenn eine Abholberechtigung für beispielsweise gereinigte Bekleidungsstücke vorliegt, d.h. diese vom Rechner festgestellt wurde, wird die Beschickungs- und Entnahmevorrichtung zu der oder den betreffenden Position(en) des Magazins geschickt, um aus den betreffenden Aufnahmen die gewünschten gereinigten Bekleidungstücke zu entnehmen und diese zur Übergabestation zu bringen. Da wenig Masse bewegt werden muss, vergeht dabei wenig Zeit.

Aus Sicherheitsgründen kann die Übergabestation mit einer Schleuse ausgestattet sein, so dass der Reinigungsbetrieb gegen unbefugte Eingriff Dritter von außen abgesichert ist. Die Schleuse kann als Drehscheibenanordnung mit einer vorzugsweise transparenten Trennwand ausgeführt sein. Auf mindestens einer Seite der Trennwand befindet sich eine Aufnahme, in die die Beschickungs- und Entnahmevorrichtung die aus dem Magazin geholten, gereinigten Bekleidungsstücke eingebracht werden. Befinden sich die Bekleidungsstücke in der Aufnahme der Übergabestation, wird die Drehscheibe gedreht und der Kunde kann die Bekleidungsstücke entnehmen. Wenn für einen Auftrag mehrere Aufnahmen im Magazin gefüllt wurden, fährt die Beschickungs- und Entnahmevorrichtung vom Rechner gesteuert, die Aufnahmen im Magazin nacheinander an, d.h. nachdem eine erste Aufnahme geleert und die dort gelagerte Ware übergeben wurde, wird die nächste Aufnahme geleert, die Übergabestation angefahren, die Bekleidungsstücke der Magazinaufnahme in die Übergabeaufnahme verbracht und gegebenenfalls eine weitere Magazinaufnahme angefahren, bis der Kunde alle dem Auftrag zugeordneten, gereinigten Bekleidungsstücke erhalten hat. Wenn auf beiden Seiten der Trennwand eine Aufnahmevorrichtung vorgesehen ist, muss die Drehscheibenanordnung für den nächsten Übergabevorgang nicht weiter oder zurück gedreht werden, damit die Beschickungs- und Entnahmevorrichtung die nächsten Bekleidungsstücke abgeben kann.

Die Drehscheibenanordnung der Übergabestation ist vorzugsweise mit vertikaler Drehachse für eine Hänge-Aufnahme der Bekleidungsstücke ausgebildet, wobei die Trennwand vertikal angeordnet ist. Es sind jedoch z.B. für Wäschereien auch sich bewegende Anordnungen, z.B. mit horizontaler Drehachse, bei denen die Ware auf einer Unterlage liegend in Paketen abgegeben wird, oder mit einem Ausgabeschacht mit einer Hubplatte möglich. Bei Verwendung einer Hubplatte sollte der Schacht nach Entnahme der Ware durch eine Abdeckung sogleich verschlossen werden, um Verschmutzungen vorzubeugen.

Die Erfindung wird im folgenden weiter anhand von Ausführungsbeispielen und der Zeichnung erläutert. Diese Darstellung soll ebenso wenig wie die Zusammenfassung von Merkmalen in den Unteransprüchen die Erfindung beschränken, sondern dient lediglich zu Erläuterungszwecken. In der Zeichnung zeigen:
- Fig. 1: eine perspektivische Teilvorderansicht eines Magazins mit einer Beschickungs- und Entnahmevorrichtung,
- Fig. 2: eine perspektivische Teilansicht des Magazins von Fig. 1,
- Fig. 3: eine Draufsicht auf ein ungefaltetes Blechteil mit Aufnahmen für Bügel, wie es bei dem Magazin von Fig. 1 verwendet ist,
- Fig. 4: eine Schnittansicht einer Transport- und Vereinze-lungsvorrichtung für den Weitertransport von Kleider-bügeln,
- Fig. 5: eine Seitenansicht einer Antriebslagerscheibe der Transport-und Vereinzelungsvorrichtung von Fig. 4,
- Fig. 6: eine schematische Seitenteilschnittansicht der Transport- und Vereinzelungsvorrichtung von Fig. 4,
- Fig. 7: eine Längsschnittansicht durch eine Übergabestation, die auf beiden Seiten einer Trennwand aufgehängte Aufnahmen für Kleiderbügel zeigt,
- Fig. 8: eine Längsteilschnittansicht längs Linie C-C in Fig. 9 und
- Fig. 9: eine Schnittansicht längs Linie B-B in Fig. 8.

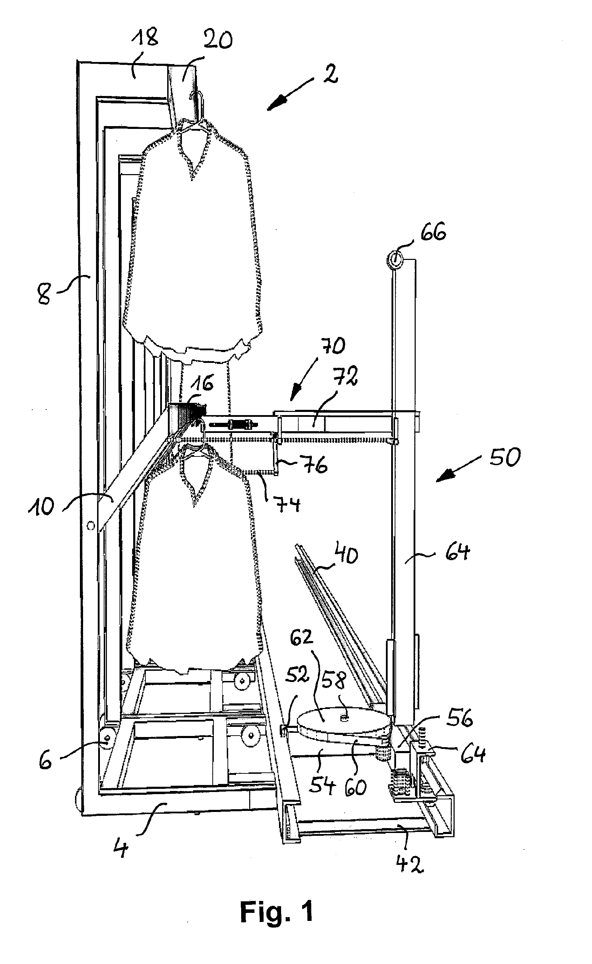

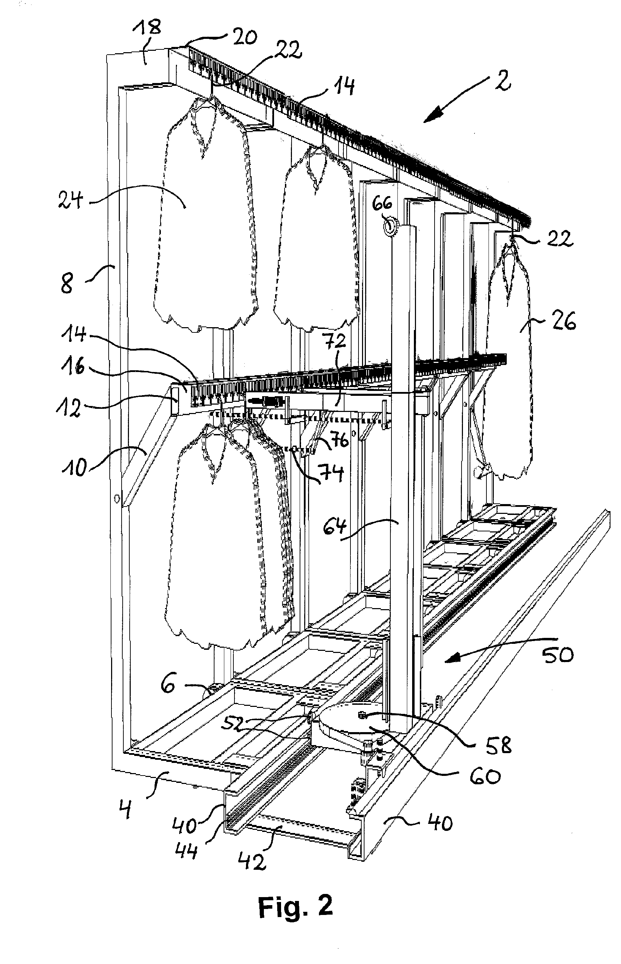

Im Folgenden wird zunächst anhand von Fig. 1 und 2 der Aufbau eines Ablage-, Entnahme- und Transportsystems für Textilerzeugnisse gemäß der Erfindung beschrieben, das beim veranschaulichten Ausführungsbeispiel für einen Reinigungsbetrieb vorgesehen ist.

In Fig. 1 und 2 ist ein Magazin zur Zwischenlagerung oder Aufbewahrung von Bekleidungsstücken für einen nächsten Arbeitsvorgang oder die Abholung dargestellt. Es handelt sich beim dargestellten Ausführungsbeispiel um ein Regalsystem, das aus mehreren, nicht notwendigerweise identischen Regalen besteht. Aus Veranschaulichungsgründen ist ein Regalabschnitt nur auf einer Seite (links in Fig. 1 und 2) dargestellt und der gegenüberliegende Regalabschnitt fortgelassen worden. Das Regal 2 umfasst einen Sockel 4, der für eventuelle Verlegungen mit Transportrollen 6 ausgestattet ist. Mit dem Sockel 4 verbunden ist ein vertikaler Rahmen 8. Der vertikale Rahmen 8 ist mit einer ersten Reihe von nach unten wegklappbaren Tragarmen 10 versehen, die einen in unterteilten Querträger 12 mit einer Schlitze 14 aufweisenden Blechverkleidung 16 haltern. Oberhalb der ersten Reihe von Tragarmen 10 ist der vertikale Rahmen 8 einstückig mit einer zweiten Reihe von horizontalen Tragarmen 18 ausgebildet, an denen eine Schlitze 14 aufweisende Blechverkleidung 20 angebracht ist. Die Blechverkleidungen 16 und 20 können gleich ausgeführt sein.

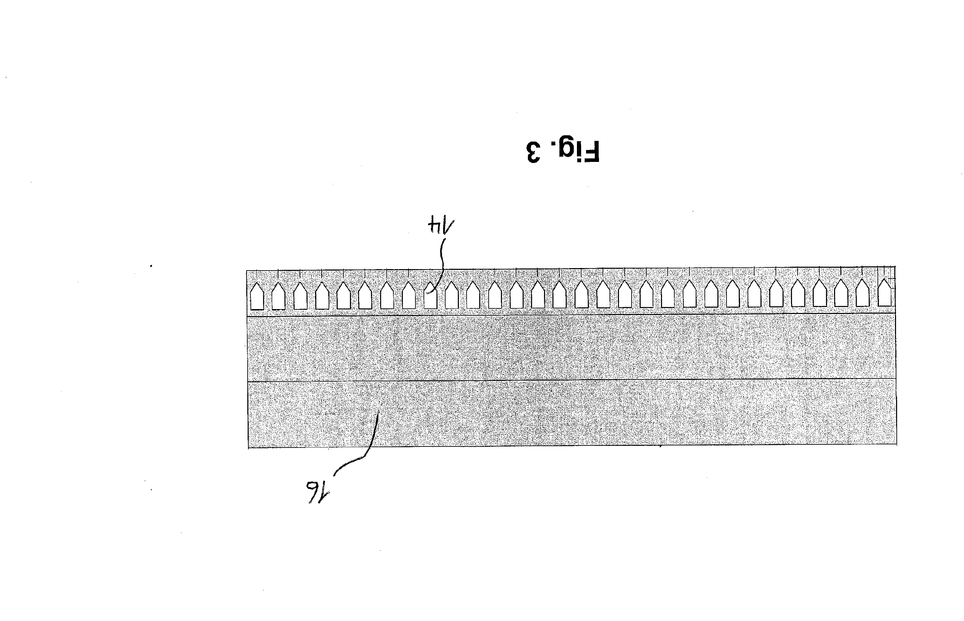

Ein ungefaltetes Blechteil für die Blechverkleidung 16, 18 ist in Fig. 3 dargestellt und zeigt die Gestalt der Schlitze 14 deutlich. Die Schlitze 14 haben im wesentlichen Rechteckgestalt, wobei ihre untere Schmalseite nach unten spitz zuläuft. In die Schlitze 14 eingehängte Kleiderbügel brauchen nur in den rechteckförmigen Bereich eingehängt zu werden und nehmen eine definierte Lage ein, wenn sie nach Freigabe nach unten in den sich verjüngenden Schlitzbereich gleiten.

In Fig. 1 und 2 sind beispielhaft in die Schlitze 14 eingehängte Kleiderbügel 22 mit Bekleidungsstücken (Hemden 24, Kleid 26) dargestellt. In Fig. 2 ist erkennbar, dass für das eine größere Länge aufweisende Kleid 26 ein Teil des Querträgers 12 mittels der entsprechenden Tragarme 10 nach unten geklappt ist.

Angrenzend an das Regal 2 befindet sich ein Paar von als Schienen dienenden C-Trägern 40, 40, die durch Querstreben 42 verbunden sind. Einer der C-Träger 40 (in Fig. 1 und 2 der linke) ist mit Kanälen 44 für nicht dargestellte Versorgungskabel und Antriebsketten ausgestattet. In den Schienen 40, 40 ist ein als Beschickungs- und Entnahmevorrichtung dienender Manipulator 50 mittels Rollen 52 verfahrbar gelagert. Der Manipulator 50 umfasst eine aus Trägern 54, 56 bestehende Basis, auf der eine um eine zentrale Achse 58 mittels eines Antriebsriemens 60 drehbare Scheibe 62 gelagert ist. Ein Antriebsaggregat 64 ist mit dem Manipulator 50 verfahrbar.

Auf der Scheibe 62 ist eine vertikale Stange 64 angebracht, die mit einer vertikalen Antriebskette versehen ist, deren eines Antriebsrad 66 zu sehen ist. Zweckmäßig ist noch eine weitere Stange vorgesehen, die aus Gründen der Übersichtlichkeit ebenso wie die Außenverkleidung fortgelassen ist. Entlang der Stange 64 in der Höhe mittels der vertikalen Antriebskette verfahrbar ist ein Greiferträger 70 in Form eines horizontalen Teleskoparms 72. Der Teleskoparm 72 ist mittels eines nicht dargestellten Kettenantriebs aus- und einfahrbar. In Fig. 1 und 2 ist er in der ausgefahrenen Position dargestellt.

Vorne am Teleskoparm 72 befindet sich ein Greifer für die Bügel 22. Er ist an einer mittels eines Kettenantriebs im Teleskoparm 72 vor und zurück verfahrbaren Halterung gehaltert. In der ausgefahrenen Position des Greifers können an diesem sitzende Klemmplatten oder Klemmbacken zum Greifen eines Bügels 22 zusammengepresst werden. Der Greifer kann dann mit dem Bügel 22 eingefahren werden. Vorteilhaft ist die Halterung am Teleskoparm 72 in der eingefahrenen bzw. zurückgefahrenen Position drehbar.

Seitlich des Teleskoparms 72 ist jeweils ein der Vereinzelung der zu entnehmenden Bekleidungsstücke 24, 26 dienendes Trennrohr oder -stab 74 mittels eines Schwenkarms 76 angelenkt.

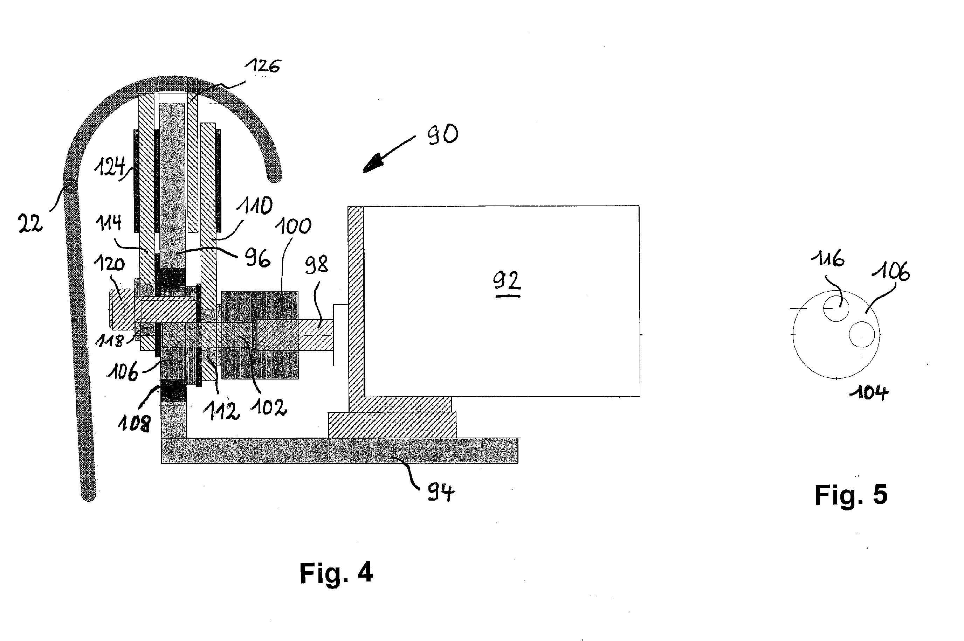

In Fig. 4 bis 6 ist eine Transport- und Vereinzelungsvorrichtung 90 für Kleiderbügel 22 dargestellt, aus der der Manipulator 50 bereitgestellte Kleiderbügel 22 mit Bekleidungsstücken zur Aufbewahrung und Weiterbehandlung abholen kann. Die Transport- und Vereinzelungsvorrichtung 90 umfasst einen auf einer Lagerplatte 94 angeordneten Antrieb 92 und eine dort ebenfalls aufgestellte, sich in horizontaler Richtung erstreckende Zentralplatte 96. Eine Drehantriebsachse 98 erstreckt sich in ein Kupplungsgehäuse 100 und von diesem aus eine Abtriebsstange 102 in eine Aufnahme 104 einer Kulissenscheibe 106. Die Kulissenscheibe 106 ist in der Zentralplatte 96 in einem Kugellager 108 drehbar gelagert. Die Abtriebsstange 102 ist in einer zur Zentralplatte 96 parallel angebrachten Halteplatte 110 mittels eines Kugellagers 112 drehbar gelagert. Gegenüber der Halteplatte 110 auf der anderen Seite der Zentralplatte 96 befindet sich eine Treibplatte 114. Diese erteilt mittels eines in einer Aufnahme 116 sitzenden, in einem Kugellager 118 gelagerten Drehzapfens 120 in Richtung eines Vereinzelungsabschnitts 122 Schubbewegungen. Auf der Oberkante der Platten 114, 96 aufgesetzte Bügel 22 werden so intermittierend in Richtung des Vereinzelungsabschnitts 122 auf der Treibplatte 114 vorbewegt und auf der Zentralplatte 96 abgelegt.

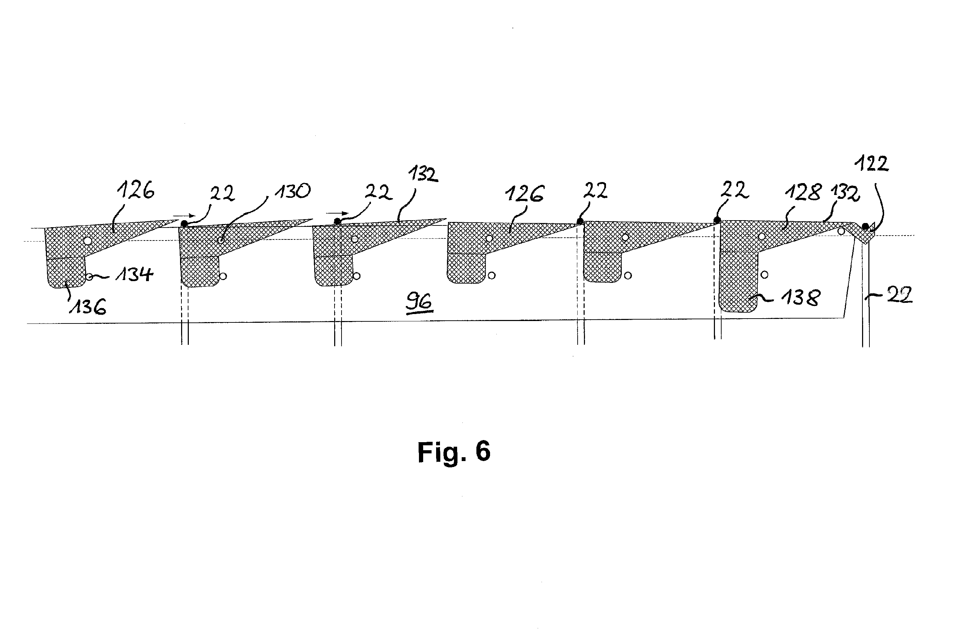

Zwischen der Zentralplatte 96 und der Halteplatte 110 ist in Längsrichtung beabstandet Abstand eine Anzahl von Distanzhakenelementen 126, 128 schwenkbar Drehzapfen 130 angebracht. Der Schwerpunkt (z.B. Gegengewicht 136) und die Lagerung der Distanzhakenelemente ist so gewählt, dass ihre oberen Gleitflächen 132 in Ruhestellung ohne Last in Richtung des Vereinzelungsabschnitts 122 aufwärts geneigt sind, wie dies bei dem in Fig. 6 ganz links befindlichen Distanzhakenelement 126 gezeigt ist. Ein Anschlagstift 134 dient zur Schwenkbegrenzung und Fixierung dieser Position. Wenn ein Bügel 22 auf ein lastfreies Distanzhakenelement 126 aufläuft, beginnt sich dieses zu verschwenken, bis seine Gleitfläche 132 über die horizontale Ausgerichtung geringfügig abwärts geneigt ist. Die hierzu vorgesehene Schwenkbegrenzung ist nicht dargestellt. Ist ein Bügel 22 allmählich bis zum vorderen Ende der Gleitfläche 132 eines Distanzhakenelements 122 vorgerutscht (siehe zweites bis viertes Distanzhakenelement 126 in Fig. 6 von links), liegt es an der Hinterkante des nächsten Distanzhakenelements 126 an und wird gestoppt, wenn sich auf diesem bereits ein Bügel 22 befindet, wie in Fig. 6 dargestellt ist. Rutscht der Bügel 22 weiter, kippt das Distanzhakenelement 126 wieder zurück bis zum Anschlag 134 und der nächste Bügel 22 kann nachrutschen.

Das letzte Distanzhakenelement 128 ist etwas schwerer, d.h. mit größerem Gegengewicht 138 ausgestattet. Es hat dieselbe Kipp- und Zugangsfunktion wie die vorhergehend angeordneten Distanzhakenelemente 126. Am Ende der Gleitfläche 132 endet es in dem bereits erwähnten Vereinzelungsabschnitt 122. Dieser ist V-förmig ausgeführt und nur von jeweils einem Bügel 22 erreicht und belegt werden. Aus dem Vereinzelungsabschnitt 122 werden die Bügel 22 mit den Bekleidungsstücken vom Manipulator 50 abgeholt und können an einer Identifizierungsstation vorbeigeführt werden. Führungen 124 dienen zur Stabilisierung der Platten 96, 110, 114.

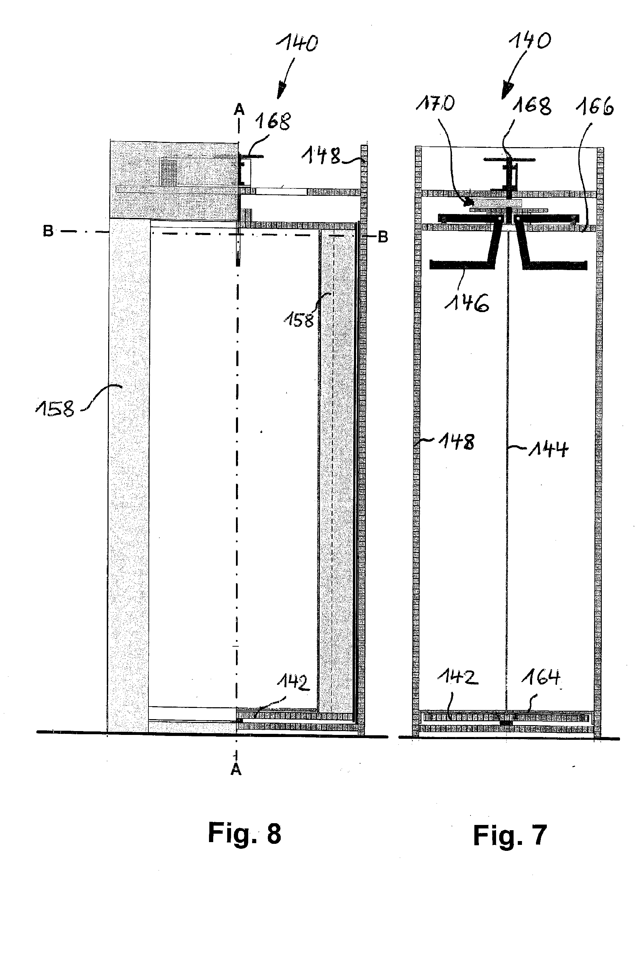

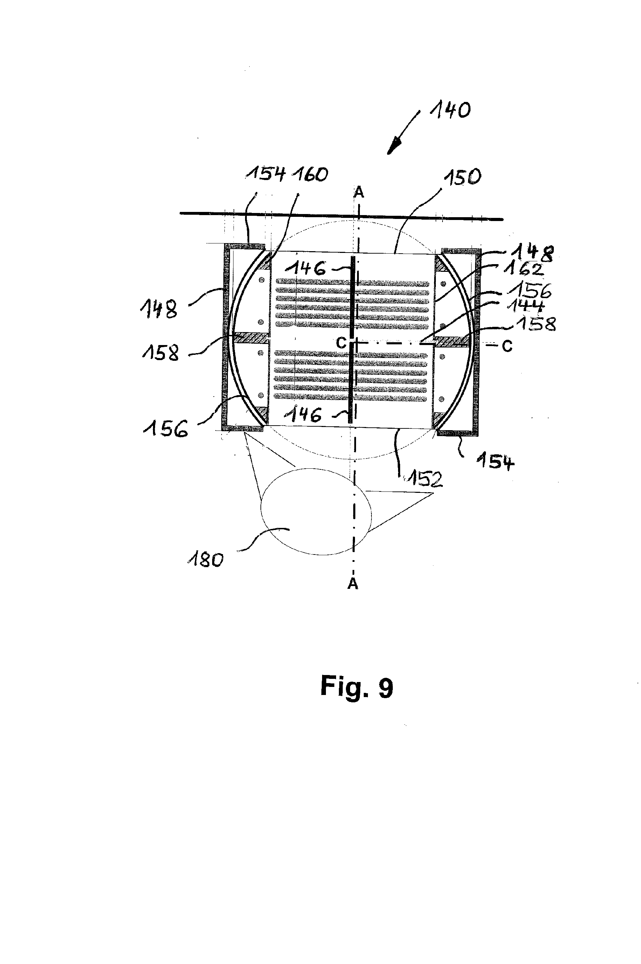

In Fig. 7 bis 9 ist eine Übergabestation 140 zur Ausgabe der gereinigten oder gewaschenen Bekleidungsstücke dargestellt. Die Übergabestation 140 umfasst eine mit Schleuse ausgeführte Drehscheibenanordnung mit einer Drehscheibe 142, einer Trennwand 144 und je einer stabförmigen Aufnahme 146 auf beiden Seiten der Trennwand 144. Ein Gehäuse 148 begrenzt die Übergabestation seitlich und lässt im Innen- und Außenraum je eine Zugriffsöffnung 150, 152 für den Manipulator 50 bzw. einen Kunden 180 frei. Abdeckleisten 154 begrenzen die Zugriffsöffnungen 150, 152. Die Drehscheibenanordnung ist zwischen einer geschlossenen Position, in der gebogene Außenwände 156 die Zugriffsöffnungen 150, 152 verschließen, und einer offenen Position drehbar, in der die Zugriffsöffnungen frei sind. In der letzteren Position, die in Fig. 9 gezeigt ist, ist die stabförmige Aufnahme senkrecht zum Kunden 180 und auch zum Manipulator 50 ausgerichtet. Der Manipulator 50 kann in dieser Position nach Erreichen der erforderlichen Höhe Kleiderbügel 22 mit gereinigten Bekleidungsstücken, üblicherweise in einer Folienummantelung, an der Aufnahme 146 aufhängen. Wenn die Drehscheibenanordnung um 180° gedreht worden ist, kann der Kunde 180 die Ware entnehmen. Die Trennwand 144 ist beim gezeigten Ausführungsbeispiel transparent. Sie ist in einer Halteleiste 158 gehaltert. Zum Inneren der Drehscheibenanordnung sind die Halteleiste 158 und außerdem von dieser beabstandete Randleisten 160 von einer Mattscheibe 162 abgedeckt. Die Drehscheibe 142 ist von einer Deckscheibe 164 abgedeckt. Oberhalb von der Aufnahmen 146 ist der Übergabebereich durch eine Abdeckplatte 166 abgedeckt, auf der die in U-Form ausgeführten Aufnahmen 146 gehaltert sind. Ein Drehantrieb 168 treibt die Drehscheibenanordnung über eine Energiekette 170 an.

## Patentansprüche

1. Ablage-, Entnahme- und Transportsystem für Textilerzeugnisse, insbesondere Bekleidungsstücke, umfassend ein Magazin (2) mit Aufnahmen (14) zum Aufbewahren der Bekleidungsstücke (24, 26) und eine mit einem Greifer versehene Beschickungs- und Entnahmevorrichtung (50) zum Einbringen und Entnehmen der Bekleidungsstücke aus den Aufnahmen des Magazins, wobei der Greifer horizontal und vertikal verfahrbar ist und eine Steuerung für den Antrieb des Greifers vorgesehen ist, **dadurch gekennzeichnet, dass** das Magazin (50) und die Aufnahmen (14) ortsfest sind und die Beschickungs- und Entnahmevorrichtung (50) horizontal verfahrbar zwischen dem Magazin (2) und mindestens einer Station (90, 120) zur Entgegennahme und/oder Übergabe der Bekleidungsstücke (24, 26) ist, wobei eine Steuerung für die Beschickungs- und Entnahmevorrichtung (50) und des Greifers vorgesehen ist, ein Speicher zur Speicherung der Ablagepositionen der Bekleidungsstücke vorgesehen ist.

2. System nach Anspruch 1, **dadurch gekennzeichnet, dass** als Magazin ein oder mehrere Regale (2) oder Gestelle, Hakenanordnungen, Stangen mit Aufnahmen für die Textilerzeugnisse, insbesondere Bekleidungsstücke (24, 26), vorgesehen sind.

3. System nach Anspruch 1 oder 2, **dadurch gekennzeichnet, dass** im Speicher freie Magazinpositionen abrufbar sind.

4. System nach einem der Ansprüche 1 bis 3, dadurch **ge** - **kennzeichnet,** dass die Beschickungs- und Entnahmevorrichtung mit einem Sensor zur Abtastung der Aufnahmen und/oder einem Sensor zur Abtastung der Textilerzeugnisse versehen ist.

5. System nach Anspruch 4, dadurch **gekennzeichet,** dass die Textilerzeugnisse mit einem Identifierungsmittel, insbesondere Identifizerungsetikett, insbesondere RFID-Chip, versehen sind.

6. System nach einem der Ansprüche 1 bis 5, **dadurch gekennzeichnet, dass** für die Ausgabe der Textilerzeugnisse eine vorzugsweise mit einer Schleuse (144) versehene Übergabestation (140) vorgesehen ist, die von der Beschickungs- und Entnahmevorrichtung (50) angefahren wird.

7. System nach Anspruch 6, **dadurch gekennzeichnet, dass** die Übergabestation eine Drehscheibenanordnung mit Trennwand (144) sowie eine Aufnahme (146) für Textilerzeugnisse auf einer Seite der Trennwand umfasst.

8. System nach einem der Ansprüche 1 bis 7, **dadurch gekennzeichnet, dass** die Beschickungs- und Entnahmevorrichtung (50) entlang einer Führung (40), insbesondere Schiene(n), verfahrbar ist.

9. System nach einem der Ansprüche 1 bis 8, **dadurch gekennzeichnet, dass** die Beschickungs- und Entnahmevorrichtung (50) ein Drehgestell (62, 64) mit einem höhenverstellbaren Greiferträger (70) umfasst.

10. System nach Anspruch 9, **dadurch gekennzeichnet, dass** am Drehgestell (62, 64) eine oder mehrere vertikale Stangen mit einem Arm angebracht sind, die den verfahrbaren Greifer tragen.

11. System nach Anspruch 10, **dadurch gekennzeichnet, dass** der Greifer in der zurückgefahrenen Position am Arm drehbar gelagert ist.

12. System nach einem der Ansprüche 1 bis 11, **dadurch gekennzeichnet, dass** der Greifer Klemmbacken zur Aufnahme von Bügeln aufweist.

13. System nach einem der Ansprüche 10 bis 12, **dadurch gekennzeichnet, dass** eine Trennvorrichtung (74) am oder benachbart dem Arm (72) für den Greifer angeordnet ist.

14. System nach einem der Ansprüche 1 bis 13, **dadurch gekennzeichnet, dass** eine Transport- und Vereinzelungsvorrichtung für Bügel vorgesehen ist, umfassend zwei parallele, horizontal ausgerichtete, langgestreckte Elemente wie Stangen oder Platten (96, 114), deren Schmallängsseiten nach oben weisen und an deren Ende sich ein Vereinzelungsabschnitt (122) befindet, wobei das eine langgestreckte Element (114) mittels eines Kulissenantriebs (92, 106) intermittierend in eine Schubbewegung in Richtung des Vereinzelungsabschnitts vorbewegt wird.

15. System nach Anspruch 14, **dadurch gekennzeichnet, dass** Distanzhakenelemente (126, 128) an dem anderen langgestreckten Element (96) schwenkbar gelagert sind.

16. System nach einem der Ansprüche 1 bis 15, **dadurch gekennzeichnet, dass** ein Annahmeterminal zur automatischen Entgegennahme von Textilerzeugnissen mit einer Einrichtung zu deren Abtastung und einer Einrichtung zum Lesen von Auftragsinformation (Kundennummer, Bankkontoangaben) vorgesehen ist sowie vorzugsweise am Annahmeterminal eine Ausgabeeinrichtung vorgesehen ist, die Auftrags- und Abholdaten ausgibt.

17. System nach einem der Ansprüche 1 bis 16, **dadurch gekennzeichnet, dass** ein Ausgabeterminal zur automatischen Ausgabe fertiger Textilerzeugnisse mit einer Eingabeeinrichtung zur Identifizierung von Auftragsdaten (Kundennummer, Auftragsnummer) vorgesehen ist.
